# EUROPEAN PATENT APPLICATION

(11) **EP 2 046 015 A2**
(43) Date of publication of application: **08.04.2009**
(21) Application number: 08162203.7
(22) Date of filing: 12.08.2008
(51) Int. Cl.: H04N 5/00

(54) **Digital broadcast receiving apparatus, semiconductor integrated circuit, and digital broadcast receiving method**

(30) Priority: 19.09.2007 JP 2007242461
(71) Applicant: Panasonic Corporation, Kadoma-shi Osaka 571-8501 (JP)
(72) Inventor: Takayama, Shuichi c/o Matsushita Electric Industrial Co., Ltd., IPRC, Shimori, Chuo-ku,Osaka, Osaka-shi Japan 540-6207 (JP); Miyashita, Takanori c/o Matsushita Electric Industrial Co., Ltd., IPRC, Shimori, Chuo-ku,Osaka, Osaka-shi Japan 540-6207 (JP); Miyachi, Ryoko c/o Matsushita Electric Industrial Co., Ltd., IPRC, Shimori, Chuo-ku,Osaka, Osaka-shi Japan 540-6207 (JP); Nakajima, Koji c/o Matsushita Electric Industrial Co., Ltd., IPRC, Shimori, Chuo-ku,Osaka, Osaka-shi Japan 540-6207 (JP); Tanaka, Sayuri c/o Matsushita Electric Industrial Co., Ltd., IPRC, Shimori, Chuo-ku,Osaka, Osaka-shi Japan 540-6207 (JP); Iwakiri, Yuji c/o Matsushita Electric Industrial Co., Ltd., IPRC, Shimori, Chuo-ku,Osaka, Osaka-shi Japan 540-6207 (JP); Tatsumoto, Hiroki c/o Matsushita Electric Industrial Co., Ltd., IPRC, Shimori, Chuo-ku,Osaka, Osaka-shi Japan 540-6207 (JP); Yamamoto, Naohiro c/o Matsushita Electric Industrial Co., Ltd., IPRC, Shimori, Chuo-ku,Osaka, Osaka-shi Japan 540-6207 (JP); Kakiuchi, Hidetoshi c/o Matsushita Electric Industrial Co., Ltd., IPRC, Shimori, Chuo-ku,Osaka, Osaka-shi Japan 540-6207 (JP)
(74) Representative: Pautex Schneider, Nicole Véronique

(57) **Abstract**

The digital broadcast receiving unit according to the present invention is a digital broadcast receiving apparatus (100) which receives Full-Seg and One-Seg radio waves and outputs Full-Seg or One-Seg video data, and includes: a demodulating unit (103) which demodulates the radio waves into a digital signal; a Full-Seg decoding unit (106) which decodes Full-Seg video data included in the digital signal; a One-Seg decoding unit (106) which decodes One-Seg video data included in the digital signal; a switching unit (107) which selects the video data decoded by the Full-Seg decoding unit (105) and the One-Seg decoding unit (106); an output unit which outputs video data selected by the switching unit (107); and a control unit (108) which causes the One-Seg decoding unit (106) to omit part of a decoding process when the switching unit (107) selects the video data decoded by the Full-Seg decoding unit (105).

## Description

### BACKGROUND OF THE INVENTION

### (1) Field of the Invention

The present invention relates to a digital broadcast receiving apparatus, a semiconductor integrated circuit, and a digital broadcast receiving method, and particularly to a digital broadcast receiving apparatus which receives a digital broadcast radio wave in which a first digital broadcast and a second digital broadcast are hierarchized and broadcast in one channel, and which outputs the video data of the first digital broadcast or the video data of the second digital broadcast.

### (2) Description of the Related Art

For digital terrestrial television broadcasting, a full-segment broadcast (hereinafter, Full Seg) for stationary apparatuses and a one-segment broadcast (hereinafter, One Seg) for portable apparatuses and mobile objects are broadcast simultaneously in plural segments in each channel. In other words, an identical content is simultaneously broadcast in plural segments of each channel.

In recent years, as for a digital broadcast receiving apparatus to be equipped on portable apparatuses and mobile objects, such as a car navigation system and an in-vehicle television, a digital broadcast receiving apparatus is suggested which: receives Full Seg and One Seg; determines automatically the target segment to be viewed according to the receiving status of digital broadcast signals, a decompression status of the digital data, and other various conditions; and switches video and audio seamlessly.

Specifically, for the digital broadcast receiving apparatus which switches video and audio seamlessly, high-definition Full Seg is the target of viewing when the receiving status is good, and One Seg which allows easier reception, though definition is low, is the target of viewing when the receiving status is poor.

In the case where the video and audio of the same content that are broadcast in plural segments are switched seamlessly, the digital broadcast receiving apparatus processes the video data and the audio data in each segment simultaneously, and switches to the video data and the audio data to be outputted at the moment when a switching condition is satisfied.

For example, for a digital broadcast receiving apparatus which switches broadcasts seamlessly, a digital broadcast receiving apparatus described in Patent Reference 1 is known.

However, continuous processing of video data and audio data simultaneously in plural segments gives a large load to the system and increase the power consumption. In recent years, low power consumption is expected for household appliances, and further, the power available for consumption is limited particularly when incorporated into a mobile body.

Therefore, it is important to curb the power consumption as much as possible by suspending a functional block that is not used. However, in a conventional digital broadcast receiving apparatus, a method of activating and suspending the functional block accompanying the switching of segments is not considered.

Patent Reference 1: Japanese Unexamined Patent Application Publication No. 2006-166035

### SUMMARY OF THE INVENTION

The present invention solves these problems and has an object to provide a digital broadcast receiving apparatus, a semiconductor integrated circuit, and a digital broadcast receiving method that allow switching of broadcast segments without an interruption of video and audio as well as allowing reduction of power consumption.

In order to achieve the object, a digital broadcast receiving apparatus according to the present invention is a digital broadcast receiving apparatus which receives a radio wave of a digital broadcast in which a first digital broadcast and a second digital broadcast are hierarchized and broadcast in one channel, and which outputs one of first video data of the first digital broadcast and second video data of the second digital broadcast, and the digital broadcast receiving apparatus includes: a receiving unit which receives the radio wave; a demodulating unit which demodulates, into a digital signal, the radio wave received by the receiving unit; a first decoding unit which decodes first data that is the first video data compressed and included in the digital signal; a second decoding unit which decodes second data that is the second video data compressed and included in the digital signal; a selection unit which selects one of the first video data and the second video data, the first video data resulting from the decoding performed by the first decoding unit and the second video data resulting from the decoding performed by the second decoding unit; an output unit which outputs one of the first video data and the second video data selected by the selection unit; and a control unit which causes the second decoding unit to omit a part of the decoding process when the selection unit selects the first video data.

According to the configuration, the digital broadcast receiving apparatus according to the present invention can decode the video data of the first digital broadcast and the video data of the second digital broadcast in parallel by the first decoding unit and the second decoding unit. With this, the digital broadcast receiving apparatus according to the present invention can switch between the first digital broadcast and the second digital broadcast without an interruption of video and audio.

Furthermore, the digital broadcast receiving apparatus according to the present invention omits a part of the decoding process for the second digital broadcast during a period when the video data of the first digital broadcast is outputted. With this, it is possible to reduce the power consumption of the digital broadcast receiving apparatus.

In addition, the second decoding unit may include: an analysis unit which separates the second data into per-picture data and judges whether the separated per-picture data is data of an intra-picture predictive-coded picture or data of an inter-picture predictive-coded picture, the intra-picture predictive-coded picture being decodable by using only the intra-picture predictive-coded picture and the inter-picture predictive-coded picture being a picture to be decoded by referring to another picture; an intra-picture predictive-coded picture decoding unit which generates the second video data by decoding the data of the intra-picture predictive-coded picture; and an inter-picture predictive-coded picture decoding unit which generates the second video data by decoding the data of the inter-picture predictive-coded picture, and the control unit may cause the inter-picture predictive-coded picture decoding unit to omit the decoding process for the data of the inter-picture predictive-coded picture when the selection unit selects the first video data.

According to the configuration, it is possible to reduce the power consumption of the digital broadcast receiving apparatus by omitting the decoding process for the inter-picture predictive-coded picture.

In addition, the second decoding unit may further include a holding unit which holds and continuously outputs the second video data that is decoded last by the intra-picture predictive-coded picture decoding unit, during a period when the decoding process for the data of the inter-picture predictive-coded picture, which the inter-picture predictive-coded picture decoding unit performs, is omitted according to the control by the control unit, and the selection unit may select one of the first video data and the second video data, the first video data resulting from the decoding performed by the first decoding unit and the second video data being outputted by the holding unit.

According to the configuration, the Intra-picture predictive-coded video data that is decoded last is continuously outputted by the decoding-result holding unit. With this, it is possible to switch from the first digital broadcast to the second digital broadcast without an interruption of video and audio.

In addition, the second decoding unit may include a deblocking filtering unit which performs a deblocking filtering process for reducing noise generated on a boundary between units to be decoded within a picture, and the control unit may cause the deblocking filtering unit to omit the deblocking filtering process when the selection unit selects the first video data.

According to the configuration, it is possible to reduce the power consumption of the digital broadcast receiving apparatus by omitting the deblocking filtering process.

In addition, the second digital broadcast may be lower-definition and easier to receive than the first digital broadcast, and the selection unit may select the first video data in the case where, in the first decoding unit, the first data can be decompressed into the first video data to a predetermined level, and to select the second video data in the case where the first data cannot be decompressed into the first video data to the predetermined level.

According to the configuration, when the reception of the high-definition first digital broadcast is difficult, it is possible to reduce, in the digital broadcast receiving apparatus which switches the target of viewing to the low-definition second digital broadcast, power consumption during a period when the high-definition first digital broadcast is viewed.

In addition, the demodulating unit may convert the radio wave received by the receiving unit into a transport stream that is the digital signal.

According to the configuration, the digital broadcast receiving apparatus according to the present invention can generate video data by decoding a video stream and an audio stream included in a transport stream.

In addition, the first decoding unit may perform decoding in accordance with MPEG-2, and the second decoding unit may perform decoding in accordance with H. 264.

According to the configuration, the digital broadcast receiving apparatus according to the present invention can decode video data compressed in accordance with MPEG-2 and H. 264, respectively.

In addition, the first digital broadcast may be a full-segment broadcast in digital terrestrial broadcasting, and the second digital broadcast may be a one-segment broadcast in digital terrestrial broadcasting.

According to the configuration, it is possible to realize a digital broadcast receiving apparatus which decodes One Seg and Full Seg in digital terrestrial broadcasting, and which can switch broadcast segments without an interruption of video and audio as well as allowing reduction of power consumption.

In addition, the first digital broadcast may be a weak-layer broadcast in digital satellite broadcasting, and the second digital broadcast may be a strong-layer broadcast in digital satellite broadcasting.

According to the configuration, it is possible to realize a digital broadcast receiving apparatus which decodes the weak layer and the strong layer in digital satellite broadcasting, and which can switch broadcast segments without an interruption of video and audio as well as allowing reduction of power consumption.

In addition, a semiconductor integrated circuit is a semiconductor integrated circuit which generates one of first video data of a first digital broadcast and second video data of a second digital broadcast, from a radio wave of a digital broadcast in which the first digital broadcast and the second digital broadcast are hierarchized and broadcast in one channel, and which outputs the one of the first video data and the second video data, and the semiconductor integrated circuit includes: a demodulating unit which demodulates the radio wave into a digital signal; a first decoding unit which decodes first data that is the first video data compressed and included in the digital signal; a second decoding unit which decodes second data that is the second video data compressed and included in the digital signal; a selection unit which selects one of the first video data and the second video data, the first video data resulting from the decoding performed by the first decoding unit and the second video data resulting from the decoding performed by the second decoding unit; an output unit which outputs one of the first video data and the second video data selected by the selection unit; and a control unit which causes the second decoding unit to omit a part of a decoding process when the selection unit selects the first video data.

According to the configuration, the semiconductor integrated circuit according to the present invention can decode the video data of the first digital broadcast and the video data of the second digital broadcast in parallel by the first decoding unit and the second decoding unit. With this, the semiconductor integrated circuit according to the present invention can switch between the first digital broadcast and the second digital' broadcast without an interruption of video and audio.

Furthermore, the semiconductor integrated circuit according to the present invention omits a part of the decoding process for the second digital broadcast during a period when the video data of the first digital broadcast is outputted.

Note that the present invention can be realized not only as such a digital broadcast receiving apparatus but also as a digital broadcast receiving method which includes, as steps, characteristic units included in such a digital broadcast receiving apparatus, and as a program which causes a computer to execute these steps. Furthermore, it goes without saying that such a program can be distributed through recording media such as CD-ROMs and transmission media such as the Internet.

As described above, the present invention can provide a digital broadcast receiving apparatus, a semiconductor integrated circuit, and a digital broadcast receiving method that allow switching of broadcast segments without an interruption of video and audio as well as a reduction of power consumption.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
FIG. 1 is a block diagram showing a functional configuration of a digital broadcast receiving apparatus according to an embodiment of the present invention.
FIG. 2 is a block diagram showing a functional configuration of a One-Seg decoding unit according to an embodiment of the present invention.
FIG. 3 is a flowchart showing a flow of an operation performed by a One-Seg decoding unit according to an embodiment of the present invention.
FIG. 4 is a sequence diagram of an exemplary operation performed by a digital broadcast receiving apparatus according to an embodiment of the present invention.

### DESCRIPTION OF THE PREFERRED EMBODIMENT

Hereinafter, an embodiment for implementing the present invention shall be described with reference to the drawings. Note that since those skilled in the art already know the basic configuration, operation, and so on of the digital broadcast receiving apparatus, the detailed description shall be omitted.

In addition, the case shall be described as an embodiment where in digital terrestrial television broadcasting, Full Seg and One Seg are simultaneously broadcast in one channel that includes plural layers (segments).

In digital terrestrial broadcasting, one channel is divided into 13 segments. Of the 13 segments, 12 segments are assigned to Full Seg (high-resolution digital broadcasting), and one segment is assigned to One Seg. In addition, four segments are assigned to broadcasting in ordinary definition.

One Seg is lower-definition as compared to Full Seg, but easier to receive even in a poor receiving status. In addition, an identical content is broadcast in One Seg and Full Seg.

In addition, in digital terrestrial broadcasting, compressed video data is transmitted. The compression format is MPEG-2 for Full Seg and H. 264 for One Seg.

First, the configuration of the digital broadcast receiving apparatus according to the embodiment of the present invention shall be described.

For example, the digital broadcast receiving apparatus according to an embodiment of the present invention is a digital broadcast receiving apparatus equipped on a car navigation system or an in-vehicle television. Note that the digital broadcast receiving apparatus according to an embodiment of the present invention may also be applied to a portable television, a note-type personal computer equipped with a television function, a personal digital assistant (PDA), a cellular phone, and so on.

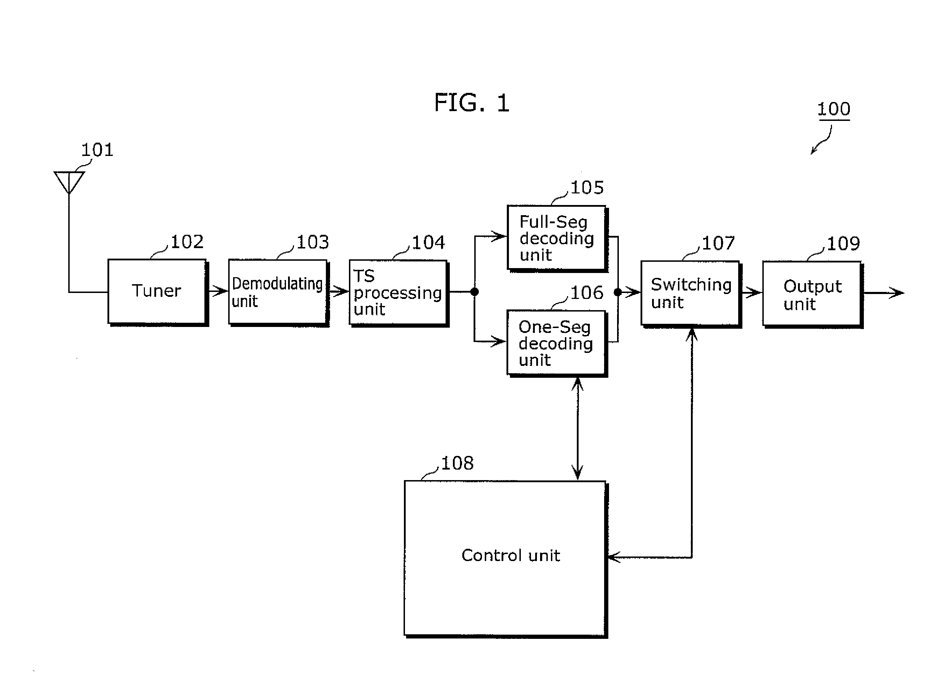

FIG. 1 is a block diagram showing a functional configuration of a digital broadcast receiving apparatus according to an embodiment of the present invention.

A digital broadcast receiving apparatus 100 shown in FIG. 1 receives a radio wave of digital terrestrial broadcasting in which One Seg and Full Seg are hierarchized and transmitted in one channel. The digital broadcast receiving apparatus 100 decodes Full-Seg and One-Seg video data from the received radio waves, and outputs, selectively, the Full-Seg or One-Seg video data.

The digital broadcast receiving apparatus 100 includes: a receiving antenna 101, a tuner 102, a demodulating unit 103, a Transport Stream (TS) processing unit 104, a Full-Seg decoding unit 105, a One-Seg decoding unit 106, a switching unit 107, a control unit 108, and an output unit 109.

The receiving antenna 101 is an antenna which receives radio waves of digital terrestrial broadcasting.

The tuner 102 receives radio waves of digital terrestrial broadcasting through the receiving antenna 101. The tuner 102 extracts a radio wave of a specific frequency band from the radio waves received by the receiving antenna 101. In other words, the tuner 102 selects a predetermined channel for digital terrestrial broadcasting, and extracts the radio wave for the predetermined channel.

The demodulating unit 103 demodulates the radio waves, having been extracted by the tuner 102, into a digital signal. Specifically, the demodulating unit 103 converts the radio wave extracted by the tuner 102 into a transport stream made up of transport stream packets (TS packets).

The TS processing unit 104 separates the data included in the digital signal demodulated by the demodulating unit 103. Specifically, each of the TS packets corresponds to the video data, broadcasting information, or the like. The TS processing unit 104 separates the TS packets demodulated by the demodulating unit 103 and included in the transport stream, into video data and broadcasting information.

The Full-Seg decoding unit 105 decodes data to be used for Full Seg from among the plural data having been separated by the TS processing unit 104. In other words, the Full-Seg decoding unit 105 decodes the data of compressed Full-Seg video data, from among the plural data having been separated by the TS processing unit 104.

The Full-Seg decoding unit 105 performs decoding in accordance with MPEG-2. The Full-Seg decoding unit 105: generates a quantized orthogonal transform coefficient through variable length decoding of the separated data; generates a difference pixel value by performing an inverse quantization process and an inverse orthogonal transform process on the quantization orthogonal transform coefficient; generates predictive image data from a reference image; and generates video data from the difference pixel value and the predictive image data.

The One-Seg decoding unit 106 decodes, into video data, the data to be used for One Seg from among plural data having been separated by the TS processing unit 104. In other words, the One-Seg decoding unit 106 decodes compressed One-Seg video data, from among the plural data having been separated by the TS processing unit 104.

The One-Seg decoding unit 106 performs decoding in accordance with H. 264. Note that the specific process of the One-Seg decoding unit is the same as the process of the Full-Seg unit 105. Note that the One-Seg decoding unit 106 further performs a deblocking filtering process as specified in H. 264. The deblocking filtering process is a filtering process for reducing noise generated on a boundary of a macroblock that is a unit of processing for decoding within a picture.

The decoding of Full-Seg video data by the Full-Seg decoding unit 105 and the decoding of One-Seg video data by the One-Seg decoding unit 106 are performed in parallel.

The switching unit 107 switches the video data to be outputted, from among the video data having been generated by the Full-Seg decoding unit 105 and the One-Seg decoding unit 106. The switching unit 107 selects the video data having been generated by the Full-Seg decoding unit 105 or the One-Seg decoding unit 106, and outputs the selected video data to the output unit 109. In other words, through the switching unit 107, it is possible to switch the target broadcast between Full Seg and One Seg.

The control unit 108 instructs the switching unit 107 to switch between Full Seg and One Seg, according to the receiving status of the digital broadcast signal, the decompression status of the digital data, and so on. Specifically, the control unit 108 causes the switching unit 107 to select Full Seg in the case where the receiving status of the digital broadcast signal is good and where the Full-Seg video data can be decompressed to a predetermined level in the Full-Seg decoding unit 105. The control unit 108 causes the switching unit 107 to select One Seg in the case where the receiving status of the digital broadcast signal is poor and where the Full-Seg video data cannot be decompressed to a predetermined level.

In addition, the control unit 108 performs control so as to cause the One-Seg decoding unit 106 to omit a part of the decoding process when the switching unit 107 selects the video data decoded by the Full-Seg decoding unit 105. In other words, the control unit 108 causes the One-Seg decoding unit 106 to omit a part of the decoding process when the Full Seg is the target of viewing.

The output unit 109 outputs the video data selected by the switching unit 107. The video data outputted by the output unit 109 is displayed, for example, in an in-vehicle display unit (display).

According to the above configuration, the digital broadcast receiving apparatus 100 can decode the Full-Seg and the One-Seg video data at the same time by using the Full-Seg decoding unit 105 and the One-Seg decoding unit 106. With this, the digital broadcast receiving apparatus 100 can perform seamless switching from Full Seg to One Seg.

Furthermore, the digital broadcast receiving apparatus 100 omits a part of the decoding process for the One-Seg video data during a period when the Full-Seg video data is outputted. With this, it is possible to reduce the power consumption of the digital broadcast receiving apparatus 100.

Here, the tuner 102, the demodulating unit 103, the TS processing unit 104, the Full-Seg decoding unit 105, the One-Seg decoding unit 106, the switching unit 107, the control unit 108, and the output unit 109 are formed as a semiconductor integrated circuit including a single chip or plural chips. Note that the function to be realized by each of the processing units may be implemented through a dedicated circuit (hardware) formed in the semiconductor integrated circuit, and may also be implemented through execution of a program (software) by a CPU or the like.

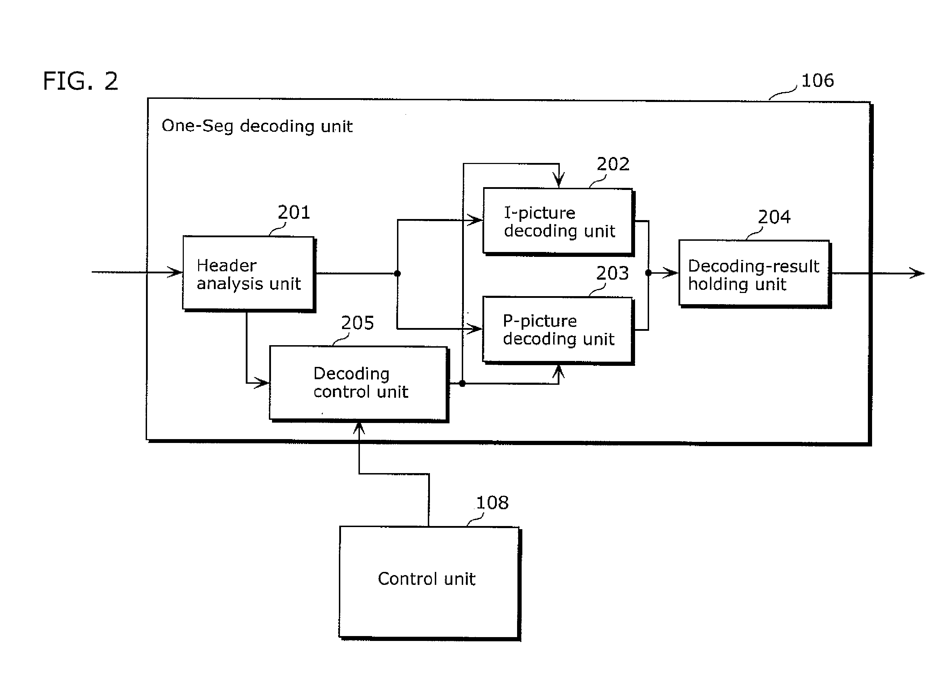

FIG. 2 is a block diagram showing the detailed configuration of the One-Seg decoding unit 106. The One-Seg decoding unit 106 includes: a header analysis unit 201, an I-picture decoding unit 202, a P-picture decoding unit 203, a decoding-result holding unit 204, and a decoding control unit 205.

The header analysis unit 201 analyzes data having been separated by the TS processing unit 104 and to be used for One Seg. Specifically, the header analysis unit 201 further separates the data, which has been separated by the TS processing unit, into per-picture data. The header analysis unit 201 judges whether the separated per-picture data is Intra-Picture (I-picture) data or Predictive-Picture (P-Picture) data. The header analysis unit 201 outputs, among from the separated pictures, I-picture data to the I-picture decoding unit 202, and P-picture data to the P-picture decoding unit 203.

Here, an I-picture is a picture that allows decoding by using only the I-picture, and specifically is an intra-picture predictive-coded picture for performing predictive coding within a picture (or a frame). Meanwhile, a P-picture is a picture that performs decoding with reference to another picture, and specifically is an inter-picture predictive-coded picture for performing predictive coding between pictures. In other words, in the present embodiment, inter-picture predictive-coded pictures including what is known as a P-picture and a B-picture in MPEG-2 and H. 264 are expressed as P-pictures.

The I-picture decoding unit 202 decodes the I-picture data outputted by the header analysis unit 201 and outputs the video data.

The P-picture decoding unit 203 decodes the P-picture data outputted by the header analysis unit 201 and outputs the video data.

The decoding control unit 205 causes the I-picture decoding unit 202 to operate when the per-picture data having been outputted by the header analysis unit 201 is I-picture, and causes the P-picture decoding unit 203 in the case of P-picture. The decoding control unit 205 judges whether the per-picture data outputted by the header analysis unit 201 is I-picture or P-picture, based on the information obtained from the header analysis unit 201.

In addition, the decoding control unit 205 causes the P-picture decoding unit 203 to omit the decoding process of the P-picture data, when instructed by the control unit 108 to omit a part of the decoding process performed by the One-Seg decoding unit 106. In other words, the decoding control unit 205 performs control so that the P-picture decoding unit 203 does not operate in the case where the per-picture data outputted by the header analysis unit 201 is P-picture.

The decoding-result holding unit 204 holds video data outputted from the I-picture decoding unit 202 and the P-picture decoding unit 203. The decoding-result holding unit 204 continues holding the video data until new video data is inputted by the I-picture decoding unit 202 and the P-picture decoding unit 203. In other words, the decoding-result holding unit 204 holds the data that is decoded last by the I-picture decoding unit 202 and continues output, during a period when the decoding process of P-picture data by the P-picture decoding unit 203 is omitted.

According to the above configuration, the digital broadcast receiving unit 100 omits the P-picture decoding process during a period when the Full Seg is selected. With this, it is possible to reduce the power consumption of the digital broadcast receiving apparatus 100.

In addition, the I-picture video data that is decoded last is continuously outputted by the decoding-result holding unit 204. With this, it is possible to switch the target broadcast from Full Seg to One Seg without an interruption of video and audio.

Next, the operation of the digital broadcast receiving apparatus 100 shall be described.

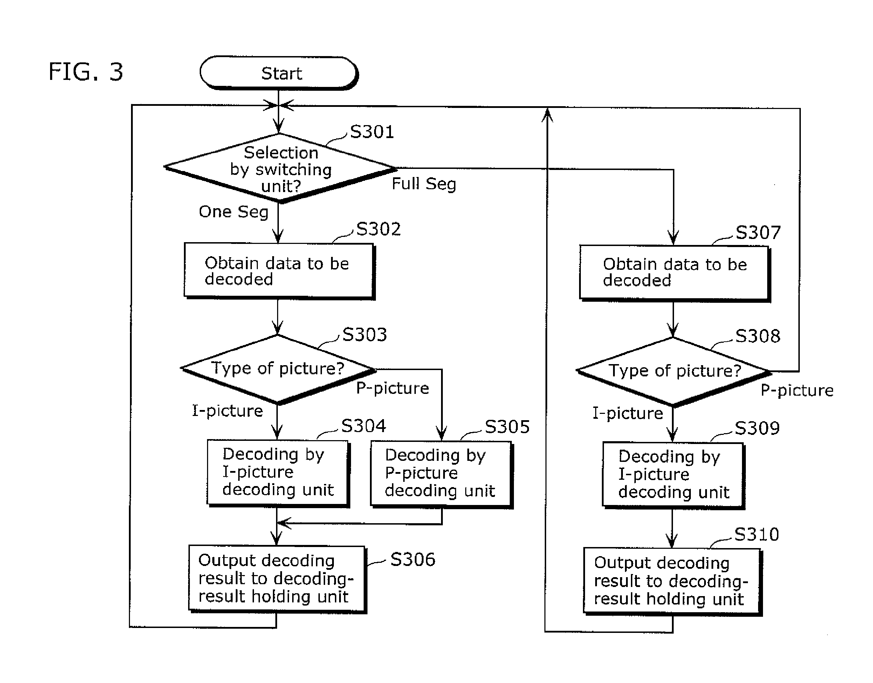

FIG. 3 is a flowchart showing a flow of the process performed by the One-Seg decoding unit 106. The flowchart shown in FIG. 3 shows a status in which the digital broadcast receiving apparatus 100 has already been receiving a broadcast.

First, the control unit 108 judges which of Full Seg and One Seg is selected by the switching unit 107 (S301).

When the switching unit 107 selects One Seg (One Seg in S301), the header analysis unit 201 obtains the data to be decoded from the TS processing unit 104 (S302). The header analysis unit 201 extracts data equivalent to one picture from the obtained data.

Next, the header analysis unit 201 judges the type of the extracted picture (S303). For example, the header analysis unit 201 judges the type of the picture by referring to the header portion of the obtained data.

When the extracted picture is an I-picture (I-picture in S303), the header analysis unit 201 outputs the I-picture to the I-picture decoding unit 202.

The I-picture decoding unit 202 decodes the I-picture outputted by the header analysis unit 201 and generates video data (S304). The I-picture decoding unit 202 outputs the decoded video data to the decoding-result holding unit 204 (S306).

On the other hand, when the extracted picture is a P-picture (P-picture in S303), the header 201 outputs the P-picture to the P-picture decoding unit 203.

The P-picture decoding unit 203 decodes the P-picture outputted by the header analysis unit 201 and generates video data (S305). The P-picture decoding unit 203 outputs the decoded video data to the decoding-result holding unit 204 (S306).

Meanwhile, when the switching unit 107 selects Full Seg (Full Seg in S301), the header analysis unit 201, as is the case with the process of Step S302, obtains the data to be decoded from the TS processing unit 104 (S307). The header analysis unit 201 extracts data of one picture from among the obtained data.

Next, the header analysis unit 201 judges the type of the extracted picture (S308).

When the extracted picture is an I-picture (I-picture in S308), the header analysis unit 201 outputs the I-picture to the I-picture decoding unit 202.

The I-picture decoding unit 202 decodes the I-picture outputted by the header analysis unit 201 and generates video data (S309). The I-picture decoding unit 202 outputs the decoded video data to the decoding-result holding unit 204 (S310).

On the other hand, when the extracted picture is a P-picture (P-picture in S308), the P-picture decoding unit 203 does not decode the P-picture.

In Steps S306 and S310, after the decoded video data is held by the decoding-result holding unit 204, the operation after Step S301 is repeatedly performed on a succeeding picture. In addition, in the case where the judgment result is P-picture in Step S308, the operation after Step S301 is repeatedly performed on a succeeding picture.

Note that the control of the process shown in FIG. 3 is implemented by the control unit 108 and the decoding control unit 205.

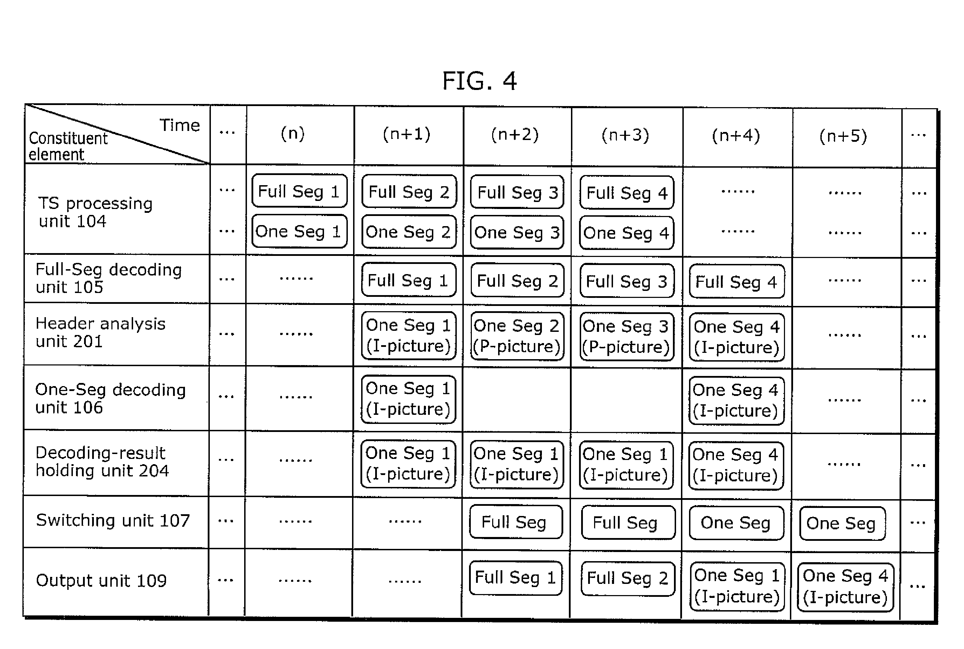

A specific operation of the digital broadcast receiving apparatus 100 shall be described below with reference to FIG. 4.

FIG. 4 is a sequence diagram of the reception process of the digital broadcast receiving apparatus 100.

In FIG. 4, in the column, the TS processing unit 104, the Full-Seg decoding unit 105, the header analysis unit 201, the One-Seg decoding unit 106, the decoding-result holding unit 204, the switching unit 107, and the output unit 109 are described, and in the row, time is described.

Since the time is excerpted, the part including Time n, n+1, n+2, n+3, n+4, and n+5 is described. In addition, each interval between n+1, n+2, n+3, n+4, and n+5 corresponds to a time period in which the digital broadcast receiving apparatus 100 performs decoding process on one picture.

The point at each column-row intersection indicates whether each processing unit performs processing on or holds the One-Seg data or Full-Seg data. In addition, Full Segs from 1 to 4 and One Segs from 1 to 4 correspond to data of a Full-Seg or One-Seg picture, respectively.

The process performed by each of the processing units shall be described below, according to Time.
(Time n)

The TS processing unit 104 separates Full Seg 1 from One Seg 1. Note that the TS processing unit 104 separates, at Time n+1 to Time n+3, Full Segs 2 to 4 from One Segs 2 to 4, respectively.
(Time n+1)

The Full-Seg decoding unit 105 decodes the Full-Seg-1 data having been separated by the TS processing unit at Time n. After this, the Full-Seg decoding unit 105 decodes, at Time n+2 to n+4, the Full Segs having been separated at just-by-one-point-preceding
Time n+1 to n+3, respectively.

The header analysis unit 201 judges whether the One-Seg-1 data having been separated by the TS processing unit 104 at Time n is an I-picture or a P-picture. Here, since the judgment result by the header analysis unit 201 is I-picture, the One-Seg decoding unit 106 generates video data by decoding the One-Seg-1 data. The decoding-result holding unit 204 holds the One-Seg-1 video data.
(Time n+2)

The switching unit 107 selects Full Seg, and the One-Seg-2 data is judged as P-picture in the header analysis unit 201; therefore, the One-Seg decoding unit 106 does not perform decoding. Thus, the decoding-result holding unit 204 continues holding the One-Seg-1 video data.

In addition, since the switching unit 107 selects the Full Seg, the output unit 109 outputs the Full-Seg-1 video data at Time n+1.
(Time n+3)

The switching unit 107 selects Full Seg, and the One-Seg-3 data is judged as P-picture in the header analysis unit 201; therefore, the One-Seg decoding unit 106 does not perform decoding. Thus, the decoding-result holding unit 204 continues holding the One-Seg-1 video data.

In addition, since the switching unit 107 selects Full Seg, the output unit 109 outputs the Full-Seg-2 video data at Time n+2.
(Time n+4)

Since the switching unit 107 selects One Seg, the One-Seg decoding unit 106 decodes the One-Seg-4 data.

The decoding-result holding unit 204 holds the decoded One-Seg-4 video data.

In addition, since the switching unit 107 selects One Seg, the output unit 109 outputs the One-Seg-1 video data held by the decoding-result holding unit 204 at Time n+3.
(Time n+5)

In addition, since the switching unit 107 selects One Seg, the output unit 109 outputs the One-Seg-4 video data held by the decoding-result holding unit 204 at Time n+4.

As described above, the digital broadcast receiving unit 100 does not decode One-Seg-2 and One-Seg-3 P-pictures at Times n+2 and n+3. With this, the digital broadcast receiving apparatus 100 can reduce power consumption further as compared to the case where One-Seg decoding is constantly performed.

Furthermore, the digital broadcast receiving apparatus 100 decodes an I-picture and holds the decoded I-picture in the decoding-result holding unit 204. With this, even when the switching unit 107 switches the target broadcast from Full Seg to One Seg, the One-Seg-1 video data can be outputted at Time n+4 since the decoding-result holding unit 204 continuously holds the One-Seg-1 video data having been decoded last. Therefore, the digital broadcast receiving unit 100 can continuously output video without generating a blackout.

Although only an exemplary embodiment of this invention has been described in detail above, those skilled in the art will readily appreciate that many modifications are possible in the exemplary embodiment without materially departing from the novel teachings and advantages of this invention. Accordingly, all such modifications are intended to be included within the scope of this invention.

For example, in the above description, the case of receiving two hierarchical layers of One Seg and Full Seg has been described, but the present invention is not limited to this. For example, the present invention can also be applied to the case where two layers, that is, a weak layer and a strong layer of digital satellite broadcasting are received. Note that the strong layer is lower-definition as compared to the weak layer but easier to receive even when the radio wave status is poor.

In addition, in the above description, the case of receiving two hierarchical layers of One Seg and Full Seg has been described, but the present invention is also applicable to the case where more than two layers are received.

In addition, in the above description, an exemplary case has been described where the P-picture decoding process is omitted when Full Seg is selected. However, instead of omitting the P-picture decoding process, the deblocking filtering process that is a part of the decoding process of H.264 can be omitted. That is, the control unit 108 may cause the One-Seg decoding unit 106 to omit the deblocking filtering process when the switching unit 107 selects Full Seg. By omitting the deblocking filtering process having a highest processing amount in the decoding processes of H. 264, it becomes possible to reduce the power consumption of the digital broadcast receiving apparatus 100 in the case where Full Seg is selected. In addition, in the case of omitting the deblocking filtering process, the One-Seg decoding unit 106 does not have to include the decoding-result holding unit 204.

Furthermore, the One-Seg decoding unit 106 may omit both the P-picture decoding process and deblocking filtering process for the I-picture in the case where Full Seg is selected.

In addition, in the above description, the control unit 108 confirms the selection by the switching unit 107 (S301) for each picture, but the confirmation may also be performed in units of a predetermined number of pictures.

### INDUSTRIAL APPLICABILITY

The present invention is applicable to a digital broadcast receiving apparatus for digital terrestrial broadcasting, digital satellite broadcasting, and so on. Specifically, the present invention is applicable to a digital broadcast receiving apparatus equipped on a mobile apparatus and a mobile body, such as an in-vehicle television, a portable television, a car navigation system, a note-type personal computer, a PDA, and a cellular phone.

## Claims

1. A digital broadcast receiving apparatus which receives a radio wave of a digital broadcast in which a first digital broadcast and a second digital broadcast are hierarchized and broadcast in one channel, and which outputs one of first video data of the first digital broadcast and second video data of the second digital broadcast, said digital broadcast receiving apparatus comprising:
a receiving unit operable to receive the radio wave;
a demodulating unit operable to demodulate, into a digital signal, the radio wave received by said receiving unit;
a first decoding unit operable to decode first data that is the first video data compressed and included in the digital signal;
a second decoding unit operable to decode second data that is the second video data compressed and included in the digital signal;
a selection unit operable to select one of the first video data and the second video data, the first video data resulting from the decoding performed by said first decoding unit and the second video data resulting from the decoding performed by said second decoding unit;
an output unit operable to output one of the first video data and the second video data selected by said selection unit; and
a control unit operable to cause said second decoding unit to omit a part of the decoding process when said selection unit selects the first video data.

2. The digital broadcast receiving apparatus according to Claim 1,
wherein said second decoding unit includes:
an analysis unit operable to separate the second data into per-picture data, and to judge whether the separated per-picture data is data of an intra-picture predictive-coded picture or data of an inter-picture predictive-coded picture, the intra-picture predictive-coded picture being decodable by using only the intra-picture predictive-coded picture and the inter-picture predictive-coded picture being a picture to be decoded by referring to another picture;
an intra-picture predictive-coded picture decoding unit operable to generate the second video data by decoding the data of the intra-picture predictive-coded picture; and
an inter-picture predictive-coded picture decoding unit operable to generate the second video data by decoding the data of the inter-picture predictive-coded picture, and
said control unit is operable to cause said inter-picture predictive-coded picture decoding unit to omit the decoding process for the data of the inter-picture predictive-coded picture when said selection unit selects the first video data.

3. The digital broadcast receiving apparatus according to Claim 2, wherein said second decoding unit further includes a holding unit operable to hold and continuously output the second video data that is decoded last by said intra-picture predictive-coded picture decoding unit, during a period when the decoding process for the data of the inter-picture predictive-coded picture, which said inter-picture predictive-coded picture decoding unit performs, is omitted according to the control by said control unit, and
said selection unit is operable to select one of the first video data and the second video data, the first video data resulting from the decoding performed by said first decoding unit and the second video data being outputted by said holding unit.

4. The digital broadcast receiving apparatus according to Claim 1,
wherein said second decoding unit includes
a deblocking filtering unit operable to perform a deblocking filtering process for reducing noise generated on a boundary between units to be decoded within a picture, and
said control unit is operable to cause said deblocking filtering unit to omit the deblocking filtering process when said selection unit selects the first video data.

5. The digital broadcast receiving apparatus according to one of Claims from 1 to 4,
wherein the second digital broadcast is lower-definition and easier to receive than the first digital broadcast, and
said selection unit is operable to select the first video data in the case where, in said first decoding unit, the first data can be decompressed into the first video data to a predetermined level, and to select the second video data in the case where the first data cannot be decompressed into the first video data to the predetermined level.

6. The digital broadcast receiving apparatus according to one of Claims from 1 to 5,
wherein said demodulating unit is operable to convert the radio wave received by said receiving unit into a transport stream that is the digital signal.

7. The digital broadcast receiving apparatus according to one of Claims from 1 to 6,
wherein said first decoding unit is operable to perform decoding in accordance with MPEG-2, and
said second decoding unit is operable to perform decoding in accordance with H. 264.

8. The digital broadcast receiving apparatus according to one of Claims from 1 to 7,
wherein said first digital broadcast is a full-segment broadcast in digital terrestrial broadcasting, and
said second digital broadcast is a one-segment broadcast in digital terrestrial broadcasting.

9. The digital broadcast receiving apparatus according to one of Claims from 1 to 7,
wherein said first digital broadcast is a weak-layer broadcast in digital satellite broadcasting, and
said second digital broadcast is a strong-layer broadcast in digital satellite broadcasting.

10. A semiconductor integrated circuit which generates one of first video data of a first digital broadcast and second video data of a second digital broadcast, from a radio wave of a digital broadcast in which the first digital broadcast and the second digital broadcast are hierarchized and broadcast in one channel, and which outputs the one of the first video data and the second video data, said semiconductor integrated circuit comprising:
a demodulating unit operable to demodulate the radio wave into a digital signal;
a first decoding unit operable to decode first data that is the first video data compressed and included in the digital signal;
a second decoding unit operable to decode second data that is the second video data compressed and included in the digital signal;
a selection unit operable to select one of the first video data and the second video data, the first video data resulting from the decoding performed by said first decoding unit and the second video data resulting from the decoding performed by said second decoding unit;
an output unit operable to output one of the first video data and the second video data selected by said selection unit; and
a control unit operable to cause said second decoding unit to omit a part of a decoding process when said selection unit selects the first video data.

11. A digital broadcast receiving method for use in a digital broadcast receiving apparatus which receives a radio wave of a digital broadcast in which a first digital broadcast and a second digital broadcast are hierarchized and broadcast in one channel, and which outputs one of first video data of the first digital broadcast and second video data of the second digital broadcast,
wherein the digital broadcast receiving apparatus includes:
a receiving unit operable to receive the radio wave;
a demodulating unit operable to demodulate, into a digital signal, the radio wave received by the receiving.unit;
a first decoding unit operable to decode first data that is the first video data compressed and included in the digital signal;
a second decoding unit operable to decode second data that is the second video data compressed and included in the digital signal;
a selection unit operable to select one of the first video data and the second video data, the first video data resulting from the decoding performed by the first decoding unit and the second video data resulting from the decoding performed by the second decoding unit; and
an output unit operable to output one of the first video data and the second video data selected by the selection unit, and
said digital broadcast receiving method causes the second decoding unit to omit a part of the decoding process when the selection unit selects the first video data.

12. A computer program product, when loaded into a digital broadcast receiving apparatus, allows said apparatus to execute a method for a program for a digital broadcast receiving method for use in a digital broadcast receiving apparatus which receives a radio wave of a digital broadcast in which a first digital broadcast and a second digital broadcast are hierarchized and broadcast in one channel, and which outputs video data of one of the first digital broadcast and the second digital broadcast,
wherein the digital broadcast receiving apparatus includes:
a receiving unit operable to receive the radio wave;
a demodulating unit operable to demodulate, into a digital signal, the radio wave received by the receiving unit;
a first decoding unit operable to decode first data that is the first video data compressed and included in the digital signal;
a second decoding unit operable to decode second data that is the second video data compressed and included in the digital signal;
a selection unit operable to select one of the first video data and the second video data, the first video data resulting from the decoding performed by the first decoding unit and the second video data resulting from the decoding performed by the second decoding unit; and
an output unit operable to output one of the first video data and the second video data selected by the selection unit, and
said program causes a computer to execute a process in which the second decoding unit is caused to omit a part of the decoding process when the selection unit selects the first video data.
